Europäisches Patentamt

European Patent Office

Office européen des brevets

(11) Publication number:
**0 294 130**
**A2**

# EUROPEAN PATENT APPLICATION

(21) Application number: **88304904.1**

(22) Date of filing: **31.05.88**

(51) Int. Cl.4: **F16F 15/12 , F16D 13/71**

(30) Priority: **05.06.87 US 58734**

(43) Date of publication of application:
**07.12.88 Bulletin 88/49**

(84) Designated Contracting States:
**DE ES FR GB IT**

(71) Applicant: **EATON CORPORATION**
**Eaton Center**
**Cleveland Ohio 44114(US)**

(72) Inventor: **Bopp, Warren Gerald**
**26338 Hidden Valley court**
**Farmington Hills Michigan 48018(US)**
Inventor: **Stretch, Dale Arden**
**31140 Wildwood 5205**
**Wixom Michigan 48096(US)**

(74) Representative: **Douglas, John Andrew**
**Eaton House Staines Road**
**Hounslow Middlesex TW4 5DX(GB)**

(54) Two mass flywheel assembly with relative rotation control.

(57) A two mass flywheel assembly (100) comprises a torsional vibration isolation mechanism including resilient means (106) and damping means (108) drivingly disposed in parallel between first and second flywheels (102,104), and clutch apparatus (110) for preventing resonance mode torque spike damage to the assembly in response to disengagement of a master clutch assembly during engine start up/shut down. A prior art two mass flywheel assembly (24) includes a modified bearing arrangement (62´) which facilitates increasing torsional damping of a damper (32´) therein for alternatively or additionally preventing resonance mode torque spike damage.

FIG 3

## TWO MASS FLYWHEEL ASSEMBLY WITH RELATIVE ROTATION CONTROL

### FIELD OF THE INVENTION

This invention relates to a torsional vibration isolation mechanism. More specifically, the invention relates to a two mass flywheel assembly having such a mechanism and means selectively operative to limit predetermined limits of relative rotation of the flywheel masses.

### BACKGROUND OF THE INVENTION

Torsional vibration isolation mechanisms have long been used to reduce the adverse effects of fluctuating torques or torsional vibrations in vehicle drivelines. A need to improve vehicle efficiency has necessitated developments that have dramatically increased transmission gear rattle noise. For example, engine efficiency has been improved by reducing the number of engine cylinders; unfortunately, this has increased torque fluctuations which cause gear rattle. Further, transmissions have been made more susceptible to gear rattle by adding speed ratios, by reducing parasitic friction, and by generally increasing transmission resonance to frequencies which occur at engine speeds in the vehicle's normal driving range.

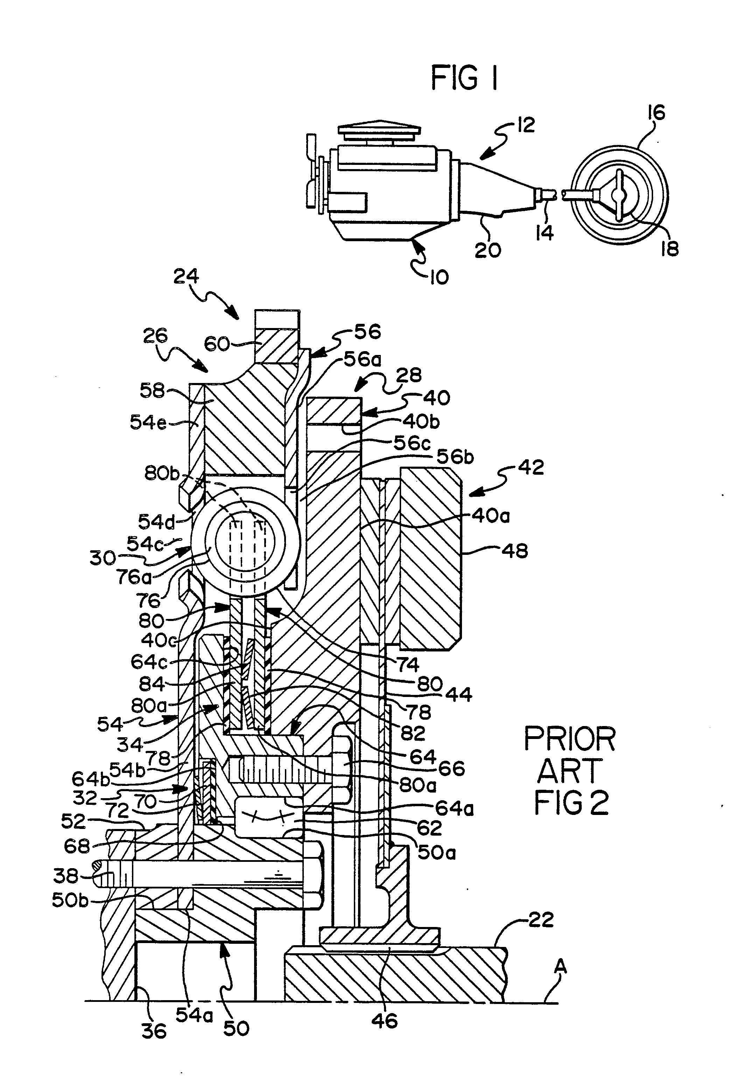

The prior art, two mass flywheel assembly shown in Figure 2 has been particularly effective in reducing gear rattle in driveline systems employing a master clutch which selectively connects an engine flywheel to a transmission input shaft. The assembly includes primary and secondary flywheel masses and a torsional isolation mechanism disposed between the masses. The isolation mechanism is relocated from the clutch plate of the master clutch, thereby simplifying the clutch plate and reducing its inertia which forms a continuous part of the transmission input shaft inertia. The reduced inertia facilitates quicker and easier synchronization of transmission ratio gears when the master clutch is disengaged. The primary flywheel mass is fixed to the engine shaft and the secondary flywheel mass is connected to the transmission input shaft only when the master clutch is engaged. When the secondary mass is connected to the input shaft, its added inertia lowers transmission resonance to frequencies less than engine speeds in the vehicle's normal driving range. Proper tuning of the two mass flywheel assembly lowers driveline resonance to frequencies less than engine idle speeds.

While the above two mass flywheel assembly has effectively eliminated the problem of gear rattle, it has also introduced another problem, namely, resonance mode operation for brief periods during engine start-up/shut-down and in some cases when the engine is lugged at speeds less than normal operating speeds. Torque spikes occurring during these periods are known to be significant enough to damage the flywheel assembly and other components in the driveline system. Such damage is prevented in the prior art flywheel assembly of Figure 2 by inserting a torque limiting clutch in series between the secondary mass and the torsional attenuating springs of the isolation mechanism. This torque limiting clutch adds cost and complexity to the flywheel assembly. Further, should the torque transmitting capacity of the clutch be set to high or increase for various reasons, the intended safeguard purpose of the clutch is lost. Still further, should the torque transmitting capacity be set to low or decrease during use to values less than are normally encountered, the clutch will continuously slip and soon fail, thereby rendering the vehicle inoperative.

### SUMMARY OF THE INVENTION

An object of this invention is to provide a two mass flywheel assembly operative to effectively dampen all modes of resonance.

According to a feature of this invention, a flywheel assembly includes first and second flywheels mounted for relative rotation within predetermined limits and a torsional vibration isolation mechanism including resilient means for flexibly transmitting torque between the flywheels within the predetermined limits; the first flywheel is adapted to be continuously connected to an engine output drive; the second flywheel is adapted to be selectively connected and disconnected to and from a transmission input drive in response to engagement and disengagement of a clutch assembly; and the improvement comprises: means for restricting the predetermined limits in response to selective disengagement of the clutch assembly.

### BRIEF DESCRIPTION OF THE DRAWINGS

The two mass flywheel assembly of the present invention is shown in the accompanying drawings in which:

Figure 1 is a schematic view of a motor vehicle driveline;

Figure 2 is a half sectional view of a prior art two mass flywheel assembly;

Figure 3 is a half sectional view of the flywheel assembly according to the present invention looking along line 3-3 of Figure 4.

Figure 4 is a reduced size, broken away, sectional view looking along line 4-4 of Figure 3; and

Figure 5 is an enlarged, broken away view of an alternative embodiment of the prior art flywheel assembly in Figure 2.

## DETAILED DESCRIPTION OF THE DRAWINGS

The motor vehicle driveline seen schematically in Figure 1 includes a prime mover or engine 10 and a transmission 12 having an output shaft 14 drivingly connected to a load such as a ground engaging wheel 16 via a differential gear assembly 18 for a rear and/or front axle of a vehicle. Prime mover 10 is preferably of the internal, periodic combustion type but may be any type of power plant having torque characteristics that are improved by a torsional vibration isolation mechanism. Transmission 12 includes a housing 20 containing a plurality of unshown, constant mesh ratio gears or ratio change mechanisms driven by a transmission input shaft 22 partially shown in Figure 2. Well-known ratio change clutches or devices within the transmission are employed to selectively, i.e., manually or automatically, connect input shaft 22 with load driving shaft 14.

Looking now at the prior art two mass flywheel assembly 24 of Figure 2, the assembly comprises primary and secondary or first and second flywheel assemblies 26, 28 rotatable about a common axis A, a torsional vibration isolation mechanism including resilient means 30 for attenuating torsional vibrations and a torsional vibration damper clutch assembly 32, and a torque limiting clutch assembly 34. Resilient means 30 and damper clutch assembly 32 are connected in parallel between the flywheel assemblies. Torque limiting clutch assembly 34 is connected in series between the resilient means and the secondary flywheel assembly. The primary flywheel assembly is fixed directly to a partially shown portion 36 of the engine output shaft by a plurality of bolts 38. Secondary flywheel assembly 28 includes a first annular friction surface 40a frictionally connectable to input shaft 22 of the transmission in response to selective engagement of a partially shown master clutch assembly 42. The clutch assembly includes a clutch plate 44 fixed for rotation with shaft 22 via a spline connection 46, and an annular pressure plate 48 fixed for rotation to secondary mass 40 via an unshown and conventional mechanism including means operative to squeeze friction linings of the clutch plate against surface 40a of the secondary mass 40.

Since the driveline torsional vibration damper mechanism 30, 32 is located between the primary and secondary flywheel assembly, clutch plate 44 may be of simple, light weight construction which adds very little inertia to input shaft 22, thereby facilitating rapid synchronization of ratio gears in the transmission.

Primary flywheel assembly 26 includes a hub member 50, an annular spacer 52, first and second radially extending plate members 54, 56, and an inertia ring 58 having a starter ring gear 60 fixed thereto. Hub member 50 includes a radially outwardly facing peripheral surface 50a for journaling the secondary flywheel assembly thereon via a bearing assembly 62 which is preferably, but not necessarily, of the double row ball bearing type. First plate member 54 includes a central opening 54a receiving an axially extending stepped down portion 50b of hub 50, an intermediate radially extending sidewall portion 54b, a plurality of circumferentially spaced apart openings or windows 54c each having radially extending end surfaces 50d, and an outer radially extending sidewall portion 54e. Second plate member 56 includes an outer radially extending wall portion 56a and a plurality of circumferentially spaced apart openings 56b, each having radially extending ends 56c. Openings 54c, 56b and their ends 54e, 56c are axially aligned. Inertia ring 58 is securely fixed between outer sidewall portions 54e, 56a of plate members 54, 56 by conventional and unshown means, e.g., bolts or welding.

Secondary flywheel assembly 28 includes the annular radially extending mass 40 and an annular support member 64 securely fixed to mass 40 by a plurality of bolts 66. Mass 40 includes the master clutch friction surface 40a, a plurality of bolt holes 40b for securing the unshown portion of clutch assembly 42 to the secondary flywheel assembly, and a second annular radially extending friction surface 40c of torque limiting clutch 34. Annular support member 64 includes a radially inwardly facing peripheral surface 64a for journaling the secondary flywheel assembly on hub 50 via bearing 62, an annular recess defining an annular radially extending friction surface 64b of damper assembly 32, and a radially outwardly extending wall portion defining an annular radially extending friction surface 64c of torque limiting clutch 34.

Damper clutch assembly 32 includes a friction material 68 supported on an annular disk 70 and biased into contact with friction surface 64b by a spring washer 72 reacting against intermediate wall portion 54b of primary flywheel plate member 54. Disk 70 and spring washer 72 are secured for rotation with the primary flywheel assembly. Accordingly, clutch assembly 32 frictionally interconnects the flywheel assemblies at all times with a torque equal to the clutch assembly's torque capacity. As with all such mechanical friction devices, the torque capacity is determined by the coefficient of friction of material 68 and the force of spring washer 72.

Resilient means 30 includes a plurality of circumferentially spaced apart coil springs 74 and spring retainer or end caps 76 disposed at each spring end. A shoulder 76a of each end cap reacts against surfaces 54d, 56c of each window 54c, 56b of plates 54, 56.

Torque limiting clutch 34 includes friction material 78 supported on annular disk portions 80a of drive rings 80 and spring washers 82, 84 biasing the friction materials into contact with friction surfaces 40c, 64c of the secondary flywheel assembly. Drive rings 80 also include a plurality of finger portion 80b (phantom lines) extending radially outward between the spaced apart ends of coil springs 74. The finger portions have unshown surfaces facing circumferentially in opposite directions and initially spaced from shoulders 76a of spring retainers 76. The initial spaces or gaps between the surfaces of the finger portions 80b and shoulders 76a of the spring retainers provide a relatively spring free torque stage at engine idle, i.e., the torque path between the flywheel assemblies is intended to be primarily via damper clutch assembly 32.

Operation of the dual mass flywheel assembly in Figure 2 is rather straight forward. Springs 74 are designed to flexibly or resiliently transfer design torque between the flywheel assemblies via torque limiting clutch assembly 34. The springs attenuate normal torque fluctuations but do not limit peak torque or high amplitude torque spikes such as may occur during periods of sudden speed change or during periods of resonance mode operation. During such periods the springs go solid and provide a non resilient torque path between the flywheel assemblies. Ideally, the springs provide enough compliance to lower driveline resonance to frequencies less than engine speeds occurring in the vehicle's normal driving range. However, resonance mode operation excited by low engine speeds is known to occur for brief periods during engine start-up/shut-down and in some cases when the engine is lugged at speeds less than normal operating speeds. Driveline system damage due to resonance mode torque spikes occurring during such brief periods is prevented by torque limiting clutch assembly 34. Torque spikes of amplitude less than the torque capacity or slip torque of torque limiting clutch assembly 34 are damped to some degree by damper clutch assembly 32. Dampers such as damper assembly 32, which has a relatively constant coefficient of friction and a constant engaging force provided by spring washer 32, provides a constant amount of damping independent of relative velocity of the damper's friction surfaces. Hence, such mechanical friction dampers over and/or under damp driveline systems which operate over wide speed and torque ranges. Such driveline systems are particularly under damped during resonance mode operation.

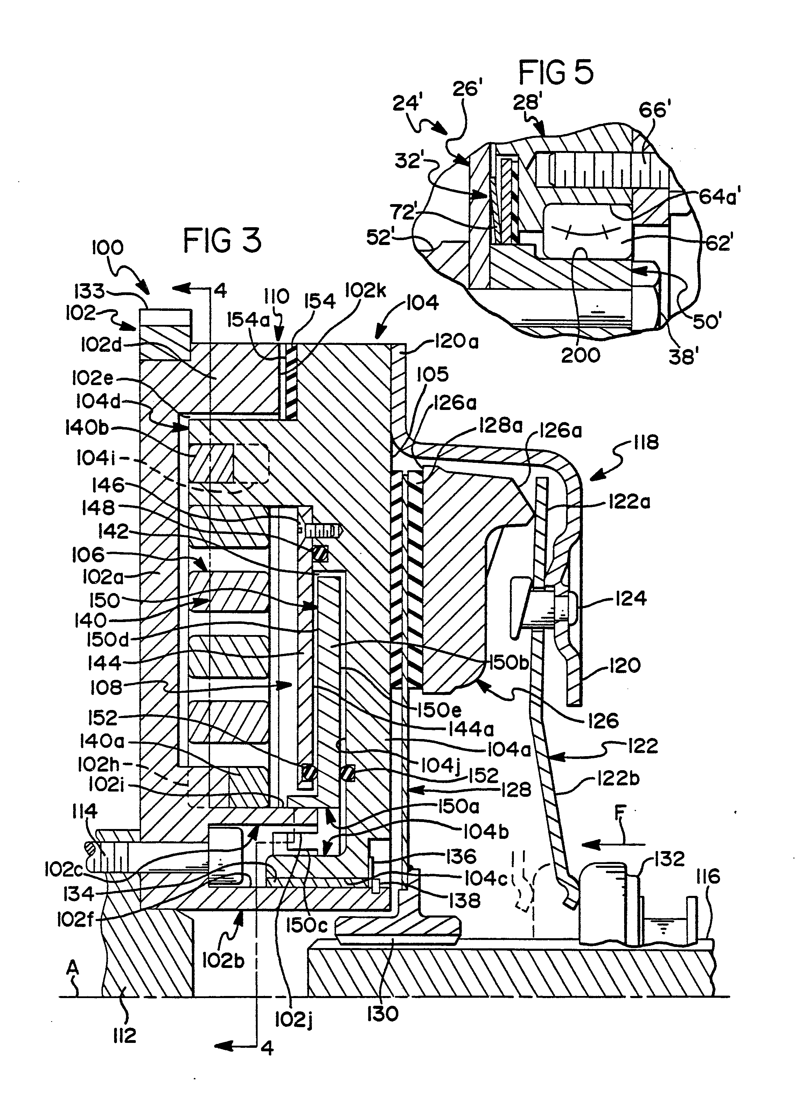

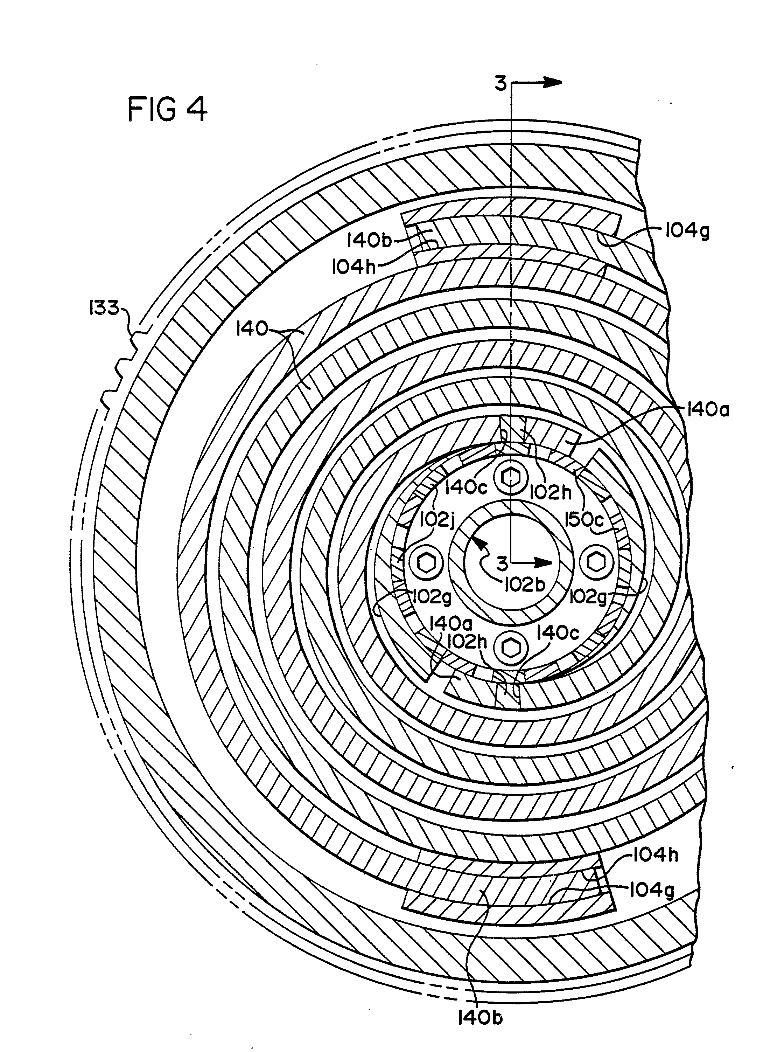

Looking now at the invention as shown in Figures 3, 4, therein is a flywheel assembly 100 including primary and secondary or first and second flywheels 102,104, a torsional vibration isolation mechanism including resilient means 106 and torsional vibration damper means 108, and a clutch apparatus 110. The first flywheel 102 is fixed directly to a partially shown portion 112 of the engine output shaft or drive by a plurality of bolts 114. Second flywheel assembly 104 includes a first annular friction surface 105 frictionally connectable to an input shaft or drive 116 of the transmission 12 in response to selective engagement of a master clutch assembly 118 in known manner. Transmission shaft 116 and master clutch assembly 118 are functionally equivalent to shaft 22 and clutch 42 in Figure 2.

Herein, by way of example only, clutch assembly 118 is of the diaphragm spring type which is pushed to effect clutch disengagement. Clutches employing other than push type diaphragm springs may be used. Clutch assembly 118 includes a generally annular cover member 120 constrained for rotation and axial movement with second flywheel assembly 104 via unshown bolts extending through a flange 120a of the cover, a diaphragm spring 122 having an outer peripheral portion 122a forming a spring washer and a plurality of radially inwardly extending fingers 122b, a plurality of circumferentially spaced apart pegs 124 securing the diaphragm spring to cover member 120 and allowing pivotal movement of the spring in known manner, a pressure plate 126 constrained to rotate with cover member 120 while being axially movable relative thereto, a friction disk or clutch plate 128 slidably splined at 130 to transmission shaft 116, and a schematically illustrated release bearing assembly 132 which is pushed in the direction of arrow F in known manner to effect clutch disengagement and allowed to move in the opposite direction to effect selective clutch engagement. Pressure plate 126 includes a friction surface 126a and plurality of circumferentially spaced apart bosses 126b reacted on by spring washer portion 122a of the diaphragm spring to effect clutch engagement by sandwiching a friction portion 128a of the clutch plate between surfaces 105,126a of second flywheel and pressure plate. When diaphragm spring finger 122b and release bearing 132 are in the solid line positions illustrated in Figure 3, clutch assembly 118 is engaged and no external forces act axially on the clutch assembly and second flywheel. When diaphragm spring fingers 122b and release bearing 132 are moved to the phantom line positions by selective movement of the release bearing in the direction of arrow F, the spring washer portion of the diaphragm moves axially away from pressure plate bosses 126b in known manner to disengage the clutch assembly. The axial force applied by release bearing 132 to effect clutch disengagement biases the clutch assembly and the second flywheel in the direction of arrow F; this force is used to engage clutch apparatus 110 as explained further hereafter.

The first flywheel 102 includes radially inner and outer portions connected together by a radially extending sidewall or intermediate portion 102a, first and second radially spaced apart hub portions 102b, 102c extending axially for the inner portion, and an annular inertia ring portion 102d extending axially from the outer portion and having a starter ring gear 133 fixed thereto. Radially extending portion 102a, second hub portion 102c, and ring portion 102d define an annular recess 102e. First hub portion 102b includes an outer peripheral surface 102f for journaling the second flywheel thereon.

The second flywheel assembly 104 includes radially inner and outer portions connected together by a radially extending sidewall or intermediate portion 104a, a hub portion 104b extending axially from the inner portion and having an inner peripheral surface 104c mounted on surface 102f of the first hub 102b for rotation and axial movement via a sleeve bearing 134, and diametrically spaced apart two spring retainer means 104d extending axially from the outer portion into a radially outer portion of annular recess 102e. Axial parting movement of the flywheels is limited by a thrust washer 136 and a retaining ring 138 disposed in an annular groove formed in the free end of first hub portion 102b.

Resilient means 106 includes a pair of nested spiral wound torsion springs 140 disposed in recess 102e and having radially inner and outer ends 140a,140b respectively fixed to second hub portion 102c of the first flywheel and spring retainer means 104d of the second flywheel. Spring retainer means for inner spring ends 140a include two radially outwardly facing scroll surfaces 102g having lugs 102h extending radially outward therefrom and received by radially extending slots 140c in spring ends 140a. During spring wind up, scroll surfaces 102g mate with the scroll shaped surfaces of the spiral wound springs, thereby providing a rather continuous seating surface which reduces transverse stress in the spring. Lugs 102h and slots 140c, preferably, have radially outwardly diverging sides to prevent radial disengagement therebetween during reverse or coast mode torque operation which unwinds or increases the overall diameter of the springs. Spring retainer means 104d each include radially inwardly and outwardly facing scroll surfaces 104g,104h and a lug 104i extending therebetween and received by an unshown radially extending slot in each spring end 140b. Lugs 104i are represented by phantom lines in Figure 3 and are analogous to lugs 102h; likewise, the unshown slots are analogous to slots 140c. Scroll surfaces 102g,102h restrain the radially outer spring ends against pivotal movement to improve stress distribution in the springs and reduce friction between the spiral coils of the springs. The oppositely facing directions of lugs 102h,104i and slots, such as slot 140c, provide several advantages: they facilitate assembly of the flywheels, they axially trap the springs therebetween and thereby prevent spring rattle, and they provide an axial resilient force biasing the flywheels apart.

Looking now at damping means 108, this assembly includes an annular housing and clutch means which are relatively rotatable within the limits allowed by springs 140 or a lesser if amount stops are provided to otherwise set predetermined limits of relative rotation of the flywheels. The housing includes an annular radially extending chamber 142 defined by radially extending and axially spaced apart clutch surfaces 104j,144a respectively defined by intermediate portion 104a of the second flywheel and an annular radially extending plate or cover 144. Cover 144 forms part of the second flywheel intermediate portion; accordingly, the annular housing is defined by intermediate portion 104a and cover 144. The radially outer portion of cover 144 is secured to the second flywheel by a plurality of circumferentially spaced apart screws 146. The outer periphery of chamber 142 is closed by a static seal 148. The clutch means includes a clutch member 150 having a radially inner portion 150a and a radially outer portion 150b. Inner portion 150a is supported on outer peripheral surface 102i of second hub portion 102c of the first flywheel. Inner portion 150a and the free end of hub 102c include mating teeth 102j,150c which allow limited relative axial movement of clutch member 150 and hub portion 104c and which may allow limited relative rotation therebetween. Outer portion 150b includes radially extending and oppositely facing clutch surfaces 150d, 150e respectively spaced axially from surfaces 104j, 144a of the chamber for clutching coaction therewith via a viscous shear liquid disposed in the chamber and in response to relative rotation therebetween. The viscous liquid is preferably of high viscosity and is preferably a silicone oil, e.g., dimethyl polysiloxane. The radially inner portion of chamber 142 is closed by annular, dynamic seals 152 or seal means disposed in annular grooves in the structure defining surfaces 104j,144a. The seals also axially position the clutch member in chamber 142 to prevent rubbing of the closely spaced clutch surfaces. The amount of damping provided by the clutching coaction in the damper is directly proportional to the area of surfaces 144a,150d and 104j,150e, the spacing or gap between the surfaces, viscosity of the viscous liquid, and the relative velocity of the surfaces. Since damping increases with increasing relative velocity, damper assembly 108 is effective to increase damping in response to increasing need for damping at both high and low frequencies, that is, relative velocity of the clutch surfaces increases in proportion to the rate of torque change and the rate of torque change is particularly great during resonance mode operation. Hence, damper assembly 108 is effective to increase damping during resonance mode operation.

In some two mass flywheel assembly applications, damping may preferably be provided by a mechanical friction damper such as damper clutch assembly 32 in Figure 2, or it may not be practical or advantageous to use a viscous damper with enough damping capacity to handle resonance mode torque spikes occurring during periods of engine start up/shut down. Resonance mode torque spikes occurring during these periods, as mentioned in the description of Figure 2, are known to be significant enough to overstress and damage components of the flywheel assembly, particularly the torsion attenuating springs and/or stops for limiting relative rotation of the flywheel within predetermined limits. Such damage is prevented by engagement of clutch apparatus 110 during engine start up/shut down. For this purpose, clutch apparatus 110 includes friction means defined by a friction surface 102k formed on an axially facing surface of the first flywheel inertia ring and a friction surface 154a formed by a friction material 154 bonded or supported on an axially facing surface of the radially outer portion of the second flywheel. The friction means restricts the predetermined limits of relative rotation in response to selective disengagement of master clutch assembly 118. Herein, the friction means of clutch apparatus 110 are engaged by the master clutch disengaging force applied by release bearing 132. The force moves the second flywheel toward the first flywheel and thereby engages friction surfaces 102k, 154a. Other means may be employed to restrict the predetermined limits of relative rotation during engine start up/shut down, e.g., means which sense master clutch disengagement or a signal operative to energize means for disengaging the master clutch. Further, the friction means of the clutch apparatus may limit the predetermined limits of relative rotation by allowing some or no relative rotation between the flywheels. With respect to the requirement for master clutch disengagement during periods of engine start up/shut down, this requirement need not entail the addition of control systems since master clutches are disengaged during such periods as part of good operating practice and, in some vehicles, lock out controls are already provided to prevent engine start up while the master clutch is engaged.

Looking now at Figure 5, the alternative embodiment is concerned with a modification of the flywheel bearing arrangement of Figure 2. Identical components in both figures are given the same numeral suffixed with a prime. The bearing arrangement of Figure 2, which includes peripheral surfaces 50a, 64a and bearing assembly 62, is configured to prevent relative axial movement of the flywheel assemblies 26, 28. The bearing arrangement of Figure 5 is configured to allow limited relative axial movement of the flywheel assembly. In Figure 5, such relative axial movement is obtained by axially extending the peripheral surface 200 of hub member 50' to allow axial movement of the second flywheel assembly in response to a mater clutch disengagement force as explained in detail with respect to Figures 3, 4. Such axial movement compresses spring washer 72' of torsional damping assembly 32' to, thereby, increase the torque capacity of assembly 32' for restricting the predetermined limits of relative rotation of the flywheels in response to selective disengagement of the master clutch. This arrangement may be used in lieu of clutch apparatus 110 or in combination therewith.

The embodiments of the present invention in Figures 3-5 have been disclosed herein only for illustration purposes. The two embodiments of Figures 3-5 disclose means for preventing damage due to resonance mode torque spikes. Additionally, the embodiment of Figures 3, 4 includes several inventive features, with respect to general structure, use of a viscous shear damper, compact placement of the damper and springs, spring retainers, multiple function of the springs, etc. Further, in the embodiment of Figures 3, 4, damper assembly 108 is formed with second flywheel 104. Alternatively, the damper may be formed with first flywheel 102. The appended claims are intended to cover the inventive features in the disclosed embodiments and modifications of the inventive features believed to be with the spirit of the invention.

## Claims

1. A flywheel assembly (100 or 24') including first and second flywheels (102,104 or 26', 28') mounted for relative rotation within predetermined limits and a torsional vibration isolation mechanism including resilient means (106 or 30') for flexibly transmitting and attenuating torque between the flywheels within the predetermined limits; the first flywheel (102 or 26') adapted to be continuously connected to an engine output drive (112 or 22'); the second flywheel (104 or 28') adapted to be selectively connected and disconnected to and from a transmission input drive (116) in response to engagement and disengagement of a clutch assembly (118); the improvement comprising: means (110 or 32') for restricting said predetermined limits in response to selective disengagement of the clutch assembly (118).

2. The flywheel assembly of Claim l, wherein said means (110 or 32') for restricting includes friction means interconnecting the flywheels (102, 104 or 26', 28') in response to said selective disengagement of the clutch assembly (118).

3. The flywheel assembly of Claim 1, wherein said second flywheel (104 or 28') is mounted for axial movement along its axis (A) of rotation, selective disengagement of the clutch assembly (118) applies a force axially moving the second flywheel (104 or 28') and engaging friction means (110 or 32') interconnecting the flywheels for restricting said predetermined limits.

4. The flywheel assembly of Claim 1, wherein the flywheels (102,104 or 26', 28') are mounted for said relative rotation about a common axis (A) on bearing means (134 or 62') supported by the first flywheel and allowing relative axial movement of the flywheels, and selective disengagement of the clutch assembly (118) applies a force effecting said relative axial movement and engaging friction means (110 or 32' ) interconnecting the flywheels for restricting said predetermined limits.

5. The flywheel assembly of Claim 4, wherein said resilient means (106) provides an axially directed force for maintaining disengagement of said friction means (110) while the clutch assembly (18) is engaged.

6. The flywheel assembly of Claim 1, wherein the torsional vibration damper mechanism further includes damper means (32') disposed in parallel with the resilient means (30') and providing a preset amount of damping between the flywheels (26', 28') when the clutch assembly (118) is engaged and an increased amount of damping (32') to restrict said predetermined limits in response to disengagement of the clutch assembly (118).

7. The flywheel assembly of Claim 6, wherein said damper means (32') includes a mechanical friction damper assembly (32) providing a first frictional force when the clutch assembly (118) is engaged and a second, greater frictional force when the clutch assembly (118) is disengaged.

8. The flywheel assembly of Claim 1, wherein the first flywheel (102) includes radially inner and outer portions connected together by a radially extending portion (102a), first and second radially spaced apart hub portions (102b,102c) extending axially from the inner portion, an annular inertia ring portion (102d) extending axially from the outer portion, an annular (102e) recess defined by said radially extending portion (102a) and second hub portion (102c) and ring portion (102d), said recess (102e) being open in the axial direction of the second flywheel (104); the second flywheel (104) having radially inner and outer portions connected together by a radially extending portion (104a), a hub portion (104b) extending axially from the inner portion of the second flywheel (104) and mounted on the first hub portion (102b) of the first flywheel (102) for rotational movement relative the first flywheel (102), spring retainer means (104d) extending axially £rom the outer portion of the second flywheel (104) and into a radially outer portion of the annular recess (102e) ; the torsional vibration isolation mechanism including spiral wound spring means (140) defining the resilient means and a damper assembly (108) disposed in parallel with the spring means (140); said spring means (140) disposed in said annular recess (102e) and having radially inner and outer ends (140a, 140b) respectively secured to the second hub portion (102c) of the first flywheel (102) and the spring retainer means (104d) of the second flywheel (104); the damper assembly (108) including an annular housing (104a,144) and clutch means (150), the housing means including an annular radially extending chamber (142) defined by axially spaced clutch surfaces (104j 144a) of the second flywheel (104) and sealed (148) at its radially outer extent, the clutch means (150) having a radially inner portion (150a) supported and driven by the second hub portion (102c) of the first flywheel (102) and a radially outer portion (150b) disposed in the chamber (142) and having radially extending and oppositely facing clutch surfaces (150d,150e) spaced from the clutch surfaces (104j,144a) of the chamber (142) for clutching coaction therebetween via a viscous shear liquid disposed in the chamber and in response to relative rotation of the flywheels (102,104), and dynamic seal means (152) cooperating between the housing (104a,144) and clutch means (150) for sealing the radially inner extent of the chamber.

9. The flywheel assembly of Claim 8, wherein said hub portion (104b) of the second flywheel (104) is mounted for axial movement on the first hub portion (102b) of the first flywheel (102), said inner portion (150a) of the damper assembly clutch means (150) is axially movable relative to the second hub portion (102c) of the first flywheel (102), and said means (110) for restricting includes adjacent surface portions (102k, 154a) of the flywheels (102, 104) which are moved into frictional engagement in response to said selective disengagement of the clutch assembly (118).

10. The flywheel assembly of Claim 9, wherein said spiral wound spring means (140) provides an axially directed force for maintaining disengagement of said surface portions (102k,154a) while the clutch assembly (118) is engaged.

11. A flywheel assembly (100) including first and second flywheels (102,104) mounted for relative rotation about a common axis (A) and a torsional isolation mechanism including resilient means (106) and damper means (108) drivingly disposed in parallel between the flywheels (102,104) for respectively attenuating and damping torsional vibrations between the flywheels (102,104); the improvement comprising:

the first flywheel including radially inner and outer portions connected together by a radially extending portion (102a) first and second radially spaced apart hub portions (102b,102c) extending axially from the inner portion, an annular inertia ring portion (102d) extending axially from the outer portion, and annular recess (102e) defined by said radially extending portion (102a) and second hub portion (102c) and ring portion (102d), said recess (102e) being open in the direction of the second flywheel (104);

the second flywheel (104) having radially inner and outer portions connected together by a radially extending portion (104a), a hub portion (104b) extending axially from the inner portion of the second flywheel (104) and mounted on the first hub portion (102b) of the first flywheel (102) for rotational and axial movement relative to the first flywheel, spring retainer means (104d) extending axially from the outer portion of the second flywheel (104) and into a radially outer portion of the annular recess (104e);

the spring means (106) being a spiral wound spring means (140) disposed in the annular recess (104e) and having radially inner and outer ends (140a, 140b) respectively secured to the second hub portion (102c) of first flywheel (102) and the spring retainer means (104d) of the second flywheel (104);

the damper assembly (108) including an annular housing (104a,144) and clutch means (150), the housing means including an annular radially extending chamber (142) defined by axially spaced apart clutch surfaces (104j,144a) formed by the second flywheel (104), the chamber (142) sealed (148) at its radially outer extent, the clutch means (150) having radially inner and outer portions (150a,150b), the radially inner portion (150a) being rotationally supported by and driven by an axially movable relative to the second hub portion (102c) of the first flywheel (102), the radially outer portion (150b) disposed in the chamber (142) and having radially extending and oppositely facing clutch surfaces (150d,150e) spaced from the clutch surfaces (104j,144a) of the chamber (142) for clutching coaction therebetween via a viscous shear liquid disposed in the chamber (142) and in response to relative rotation of the flywheels (102,104), and dynamic seal means (152) cooperating between the housing (104a,144) and clutch means (150) for sealing the radially inner extent of the chamber (152); and

adjacent portions of the flywheels (102, 104) including friction surfaces (102k,154a) movable into engagement in response to axial movement of the flywheels (104) toward each other.

12. The flywheel assembly of Claim 11, wherein said spiral wound spring means (140) provide an axially directed force for maintaining disengagement of friction surfaces (102k,154a) while the clutch assembly (118) is engaged.

13. The flywheel assembly Claim 11, further including a prime mover (10) having an output drive (112) continuously connected to one of the flywheels (102), a transmission having an input drive (116) connectable to the other flywheel (104) via selective engagement of a clutch assembly (118), and wherein selective disengagement of the clutch assembly (118) applies a force (F) which axially moves the second flywheel to effect engagement of said frictional surfaces (102k,154a).

14. The flywheel assembly of Claim 13, wherein the first flywheel (102) is continuously connected to the prime mover output drive (112) and the second flywheel (104) is selectively connectable to the transmission input drive (116).

15. A flywheel assembly (100) comprising first and second flywheels (102,104), means (134) mounting the flywheels for limited relative rotation about a common axis (A) and a torsional vibration isolation mechanism including resilient means (106) and damper means (108) drivingly disposed in parallel between the flywheels for respectively attenuating and damping torsional vibrations between the flywheels within the limits of the limited relative rotation; the improvement comprising:

the means (134) mounting including means allowing relative axial movement of the flywheels along the common axis (A); and

the flywheels including friction surfaces 102k,154a) movable into engagement in response to axial movement of the flywheels toward each other.

16. The flywheel assembly of Claim 15, wherein the resilient means (106) provides an axially directed force opposing said axial movement of the flywheels toward each other.

# FIG I

16

12

14

20

18

10

24

26

60

56

56a

28

40

58

54e

40b

56c

56b

42

80b

40a

48

54d

30

54c

76a

76

80

40c

74

64c

80 44

84

80a

78

54

82

34

64 66

78

80a

52

72 70

64a

62

68

50a

38

50b

22

A

36

54a 50

46

PRIOR
ART
FIG 2

64b 54b

32

FIG 5

FIG 3

FIG 4